# EUROPEAN PATENT APPLICATION

(11) **EP 4 286 717 A1**
(43) Date of publication of application: **06.12.2023**
(21) Application number: 22461558.3
(22) Date of filing: 31.05.2022
(51) Int. Cl.: F16K 5/06, F16K 5/20

(54) **BALL VALVE ASSEMBLY**

(71) Applicant: B/E Aerospace, Inc., Winston Salem, NC 27105 (US)
(72) Inventor: KROCZEK, Piotr, 51-317 Wroclaw (PL); SAPIJA, Dariusz, 51-317 Wroclaw (PL)
(74) Representative: Dehns

(57) **Abstract**

A ball shaft comprising a ball shaft head part (111) having a top surface and a bottom surface, an axis extending through the top and the bottom surfaces, a passage (112) extending through the head part the passage opening, at a first end, at a first side of the head part and at a second end at an opposite second side of the head part, wherein the head part has flattened outer surfaces (111a, 111b) at each of the first and second sides and at sides between the first and second sides, the flattened outer surfaces separated by rounded corners (113)..

## Description

### TECHNICAL FIELD

The present disclosure relates a ball valve assembly and, in particular, but not exclusively, an assembly for a motorised ball valve.

### BACKGROUND

Ball valves are widely used for controlling flow of a fluid e.g. water. The valve includes a ball shaft comprising a spherical body having a hole or passage therethrough. The ball shaft is rotatable relative to a fluid flow channel. When the hole through the ball shaft is aligned with a valve inlet and a valve outlet which form parts of the fluid flow channel, the valve allows fluid flow through the fluid flow channel via the valve inlet, through the ball shaft passage and through the valve outlet. To stop flow, the ball shaft is rotated so that the hole is not aligned with the flow channel (i.e. is out of alignment with the valve inlet and the valve outlet. Ball valves can be operated manually e.g. by means of a handle for rotating the ball. Actuated ball valves are operated by a motor, the motor rotates a drive shaft which is connected to and rotates the ball shaft between the open and closed positions. Ball valves find use in e.g. sanitation or water systems. One application of a valve moved by an electric motor is in an aircraft water supply system. Aircraft commonly have a water supply system for providing potable water to various outlets e.g. to sinks or wash basins, coffee machines, toilets, etc. One or more valve assemblies is provided in the system for the various outlets and at least some of these are driven by an electric motor so that they can be operated remotely or automatically. Such a system is described e.g. in US 8,172,198. The use of actuated ball valves is, however, not limited to aircraft water systems and there are many other fields of application for such systems.

Actuated ball valves comprise the motor and drive shaft, also known as the 'dry' part, and the ball shaft part, which comes into contact with the water, also known as the 'wet' part. Seals need to be provided between the ball shaft and the valve housing and between wet part and the dry part to avoid leakage and damage to the assembly by water getting to the electric motor during operation.

In a conventional assembly, the seals are in the form of a seal ring having and enlarged seal periphery. The ring fits around the passage through the ball shaft and matches the valve inlet and valve outlet openings and the enlarged periphery is pressed by means of spring against the outer spherical walls of the ball shaft to ensure a seal between the valve parts within which the ball shaft rotates and the ball shaft itself, at all times. The seals are generally made of Teflon or similar durable material.

Because the ball shaft, at all stages of rotation, rotates against the seals, multiple rotations of the ball shaft cause wear and degradation of the seals and eventually leakage will appear between the ball shaft and the seal due to such wear and degradation. In some systems, degradation of the seals has been observed after, say, 20000 actuations of the valve, after which the seals need to be replaced. The rest of the valve parts, however, are able to work for many more actuations without needing replacement. The seals, therefore, present the limiting factor on the lifetime of the valve assembly.

There is, therefore, a need to provide a ball valve assembly whereby the seals remain effective for a longer life of operation of the valve.

### SUMMARY

According to one aspect, there is provided a ball shaft for a ball valve assembly, the ball shaft comprising a ball shaft head part (111) having a top surface and a bottom surface, an axis extending through the top and the bottom surfaces, a passage (112) extending through the head part the passage opening, at a first end, at a first side of the head part and at a second end at an opposite second side of the head part, wherein the head part has flattened outer surfaces (111a, 111b) at each of the first and second sides and at sides between the first and second sides, the flattened outer surfaces separated by rounded corners (113).

According to a further aspect, there is provided a ball shaft valve assembly having such a ball shaft.

Preferred embodiments will now be described by way of example only, with reference to the drawings.

### BRIEF DESCRIPTION OF THE DRAWINGS

Figure 1 shows a conventional valve assembly by way of background and for the purposes of explanation.
Figure 2A shows an example of a ball valve assembly, in a first, or closed position, having a ball shaft modified according to the present disclosure, from a top view.
Figure 2B is a side-sectional view of the assembly of Figure 2A.
Figure 3A shows the assembly of Fig. 2A in an intermediate rotation position.
Figure 3B as a side-sectional view of the assembly of Fig. 3A.
Figure 4A shows the assembly of Figs. 2A and 3A in a second, open position.
Figure 4B is a side-sectional view of the assembly of Fig. 4A.
Figure 5 is a perspective view of an example of ball shaft according to this disclosure.
Figure 6 is a perspective view of a seal for use in an example of an assembly according to the disclosure.

### DETAILED DESCRIPTION

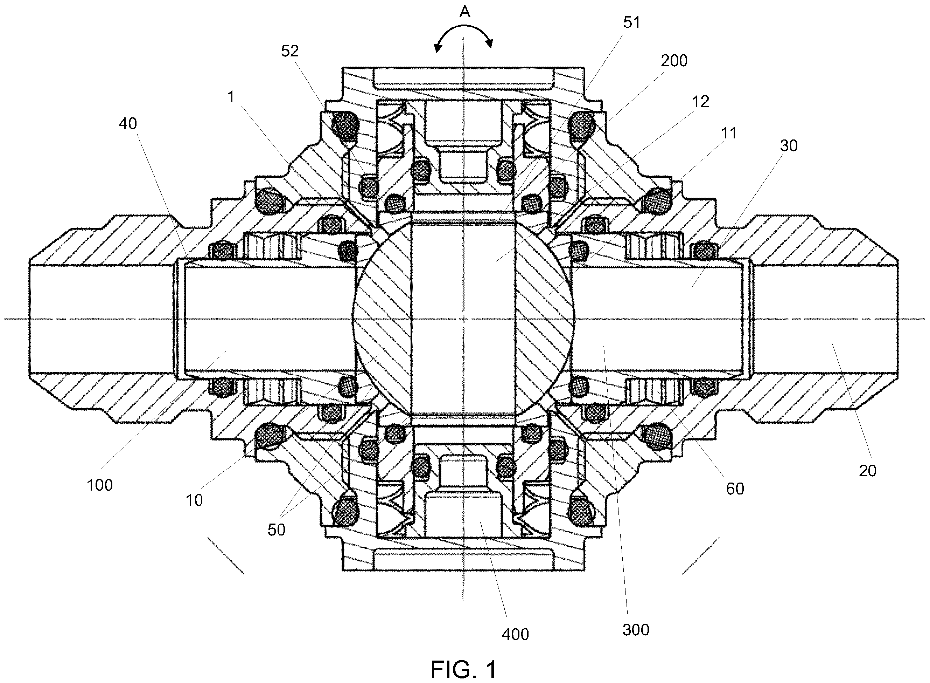

Figure 1 is a top view of a known motorised ball valve assembly.

The operational part of the valve comprises a valve housing 1 defiining a plurality of ports 100, 200, 300, 400 and within which is rotatably mounted a ball shaft 10 having a spherical head part 11 defining a flow passage 12 therethrough, and a shaft part (not shown in Fig. 1) extending from the head for engagement with a drive part of the assembly. In use, the valve is arranged in a water or fluid pipe system such that in a first rotational position of the ball shaft 10, the passage is aligned with a fluid pipe 20, via a valve inlet 30 and a valve outlet 40 to form a flow passage from the pipe 20via the inlet 30 and through the passage 12 to the continuation of the pipe via the valve outlet 40. Fig. 1 shows the valve in the closed position, where the passage 12 is not aligned with the inlet and the outlet and so flow through the pipe 20 is prevented by the ball valve. To open the valve and switch on the flow, the ball shaft is rotated e.g. by one quarter turn, (arrow A in Fig. 1) so that the passage 12 is aligned with the pipe via the valve inlet and the valve outlet and, instead, flow through the pipe continues through the ball shaft. Valves with several positions and several input/output ports are known.

In a motorised ball valve, the ball shaft is rotated by means of an electric motor (not shown). The electric motor drives a drive shaft (not shown) which engages with the ball shaft 10. Rotation of the motor causes rotation of the drive shaft which, in turn, rotates the ball shaft 10. Seals 50 e.g. O-rings as described further below may be provided around the spherical ball shaft head 11, to prevent leakage between the ball shaft and the valve inlets/outlets. These components are standard for a motorised ball valve such as described in US 8,172,198.

In the known assemblies, seals 50 are provided at the ports between the system and the ball shaft 10 to seal against leakage from the ports around the spherical ball shaft head part 11. The seals are generally in the form of O-rings provided at the valve port positions (here the four 45 deg. positions of rotation of the ball 11. The seals, which may be made of e.g. Teflon or similar material, have an inner ring part 51 that is sandwiched between the spherical ball shaft head part 11 and the ports 100, 200, 300, 400, and an outer thicker portion 52. This part is pressed into contact with the outer spherical surface of the ball shaft head part by means of a spring 60 provided in the housing 1 around the respective port.

In Fig. 1, it can be seen that in this example, all springs push against all seals so that all springs are pushed into surface contact with the ball at all times.

As the seals are being pressed by the springs into contact with the ball shaft, as the ball shaft rotates to change the valve position, it rotates against the seals and can result in wear and degradation of the seals as mentioned above.

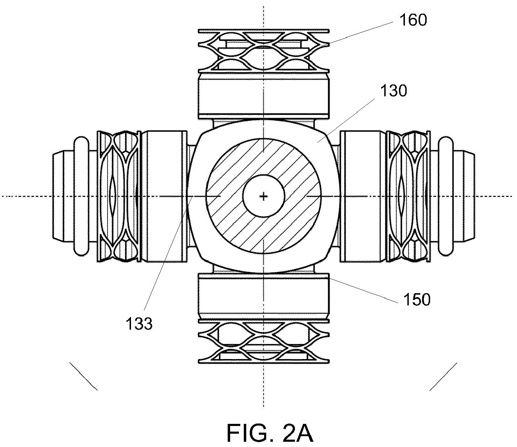

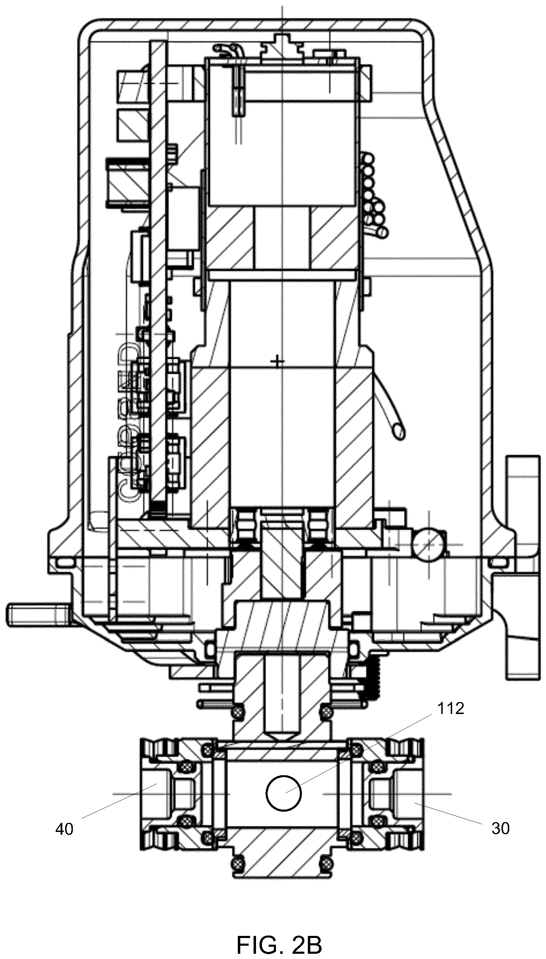

The assembly of the present disclosure reduces wear on the seals by reducing or eliminating contact between the seals and the ball shaft while the ball shaft is changing position. This is achieved by a modification of the ball shaft and the seals as described in more detail below with reference to Figs. 2 to 6.

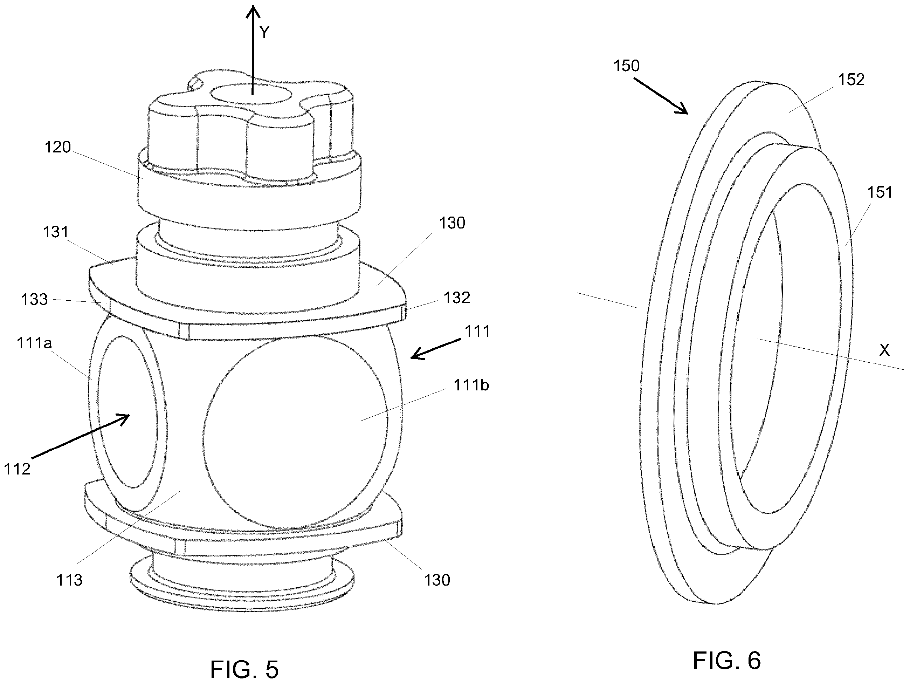

Reference is first made to Figs 5 and 6 which show, respectively, a ball shaft and a seal modified according to an example of the present invention.

Key to reducing contact between the ball shaft and the seal while the ball shaft is rotating to change position is the modified shape of the ball shaft head part 111 seen best in Fig. 5. Fig. 5 also shows the shaft part 120 of the ball shaft which engages with the motor via the drive shaft, in use. The shaft part of the ball shaft is shown, in this example, to have a lobe-structure plug type design for engagement in a corresponding socket of a drive or a cam shaft, but this is one example only, and any ball shaft design can be modified according to this disclosure. The modification is only to the head part 111.

In the ball shaft of the invention, rather than the head part being spherical as in conventional ball shafts, the outer surface of the head part is formed with opposing flattened surfaces 111a, 111b. First opposing flattened surfaces 111a are formed around the ends of the passage 112 that engage with the valve inlet and valve outlet when the valve is open. Second opposing flat surfaces 111b are formed between the first flattened surfaces around the outer surface of the head part. The resulting shape of the head part of the ball shaft is essentially a cube shape with rounded corners 113.

To sealingly mate with the flattened surfaces, the seal 150 is a ring seal as shown in Fig. 6 having an inner flat annular surface 151 and an outer flat annular surface 152. Defined with reference to an axis X through the seal, the first annular surface 151 protrudes further in the axial direction than the second annular surface 152. The first annular surface 151 contacts the flat surface 111a of the ball shaft around the passage 112 when the valve is in the open position and contacts the second flat surface 111b when the valve is in the closed position.

The mating flat surfaces of the ball shaft head part and of the seal provide a more effective sealing than the known seals which have to seal against a spherical surface.

To further improve the life of the seal, in one example of the invention, an additional feature may be provided on the ball shaft as seen in the example of Fig. 5. Here a cam surface 130 is provided on the top and bottom of the head part. The cam surface 130 protrudes circumferentially beyond the outer surface of the head part defined by the flat surfaces 111a, 111b and the rounded corners 113 therebetween. The periphery 131 of the cam surface 130 has a non-circular profile. In the example shown, the cam surface is in the form of a flat plate having four corners 132 substantially aligned with the rounded corners 113 of the head part, and sides 133 defining a convex curved surface between each pair of adjacent ones of the corners 132. The convex sides extend radially beyond the flat surfaces 111a, 111b of the head part with respect to an axis Y through the ball shaft. The cam surface is configured, as will be described further below, to urge the seal 150 away from contact with the ball shaft while the ball shaft is rotating between its open and closed positions and to guide the seal back into engagement with the flat surfaces of the ball shaft head part when the valve is in the open or closed position.

This operation will be further described with reference to Figs. 2A, 2B, 3A, 3B, 4A and 4B.

Referring first to Figs. 2A and 2B, these show, (from above and from the side, respectively) the valve in a closed position where the passage 112 through the ball shaft head part 111 is 90 degrees out of alignment with the inlet 30 and outlet 40. In this position, the second opposing flat sides 111b are aligned with the inlet and the outlet. Seals 150 e.g. Teflon or similar seals, are located between the inlet port and the outlet port and the ball shaft such that the inner or first annular surface 151 of the seal 150 sealingly abuts against the respective flat surface 111b. The seals are pressed by seal springs 160 towards the ball shaft. In the example shown, where the ball shaft is also provided with the cam surfaces 130, the convex side 133 abuts the second, or outer, flat annular surface 152 of the seal and the first annular surface 151 of the seal extends radially further inwards to seal against the flat surface of the head part. Therefore, in this position, seals sealing engage each of the flat surfaces 111a, 111b of the ball shaft, as best shown in Fig. 2A.

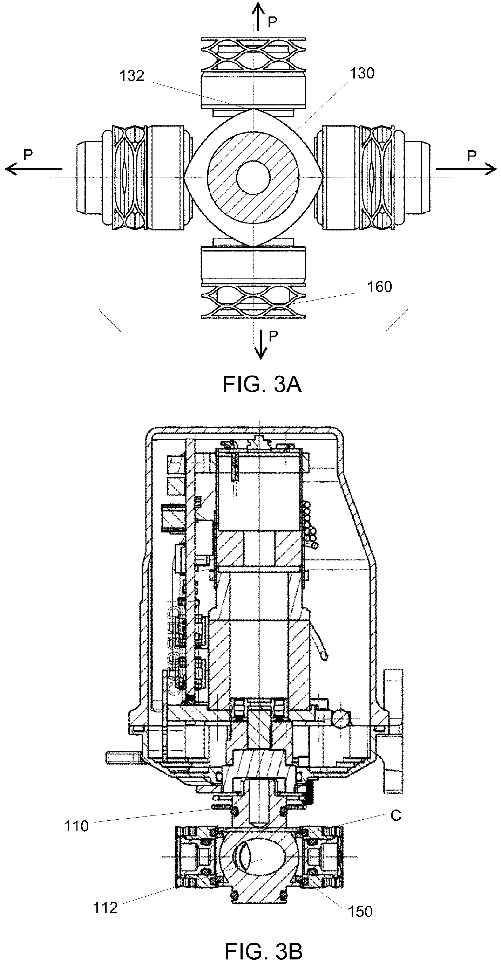

When the ball shaft 110 is rotated to change to the closed position, the cam surface 130 is configured to urge the seal out of contact with the outer surface of the ball shaft head part, against the force of the seal springs 160. This can be seen in Figs. 3A and 3B where the ball shaft is rotated (here by around 45 degrees) relative to the inlet and outlet and the valve ports. The shape of the cam surface 130 is such that as that surface rotates with the ball shaft, the corners of the cam surface press against the outer annular surface 152 of the seal forcing the seal, and hence its inner annular surface 151 away from the ball shaft in the direction of arrows P thus providing a clearance C between the seal and the outer surface of the ball shaft head part 111. During rotation, therefore, there is no contact between the ball shaft head part and the seal to cause wear or degradation of the seal.

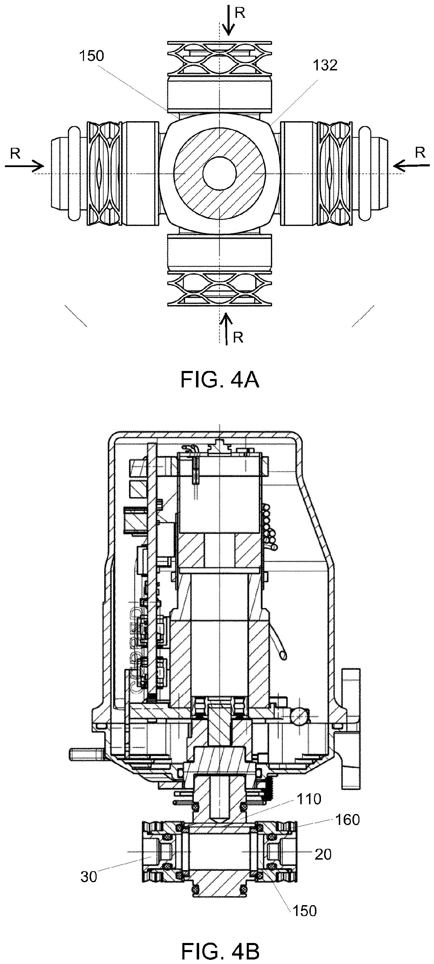

After further rotation, the ball valve 110 reaches its open position (Figs 4A, 4b) where the passage 112 is aligned with the valve inlet and the valve outlet. The corners 132 of the cam surface are now located between adjacent seals 150 (best seen in Fig. 4A) and so are not pushing the seals away from the ball shaft. The seals 150 are then able to return in the direction of arrows R, under the force of seal springs 160 to sealingly engage with the respective flat surfaces 111a, 111b of the ball shaft and to seal around the passage 112 as seen in Fig. 4B.

By ensuring that the seals are not in contact with the ball shaft as it rotates between the open and closed position, wear on the seals is considerably reduced and the life of the seals is correspondingly increased. The life of the seals has been found to last up to 300, 000 actuations of the ball shaft. The flat surface contacts between the seal and the ball shaft also ensure a very tight seal which ensures there is no leakage even with large deviations in the shapes of the parts.

## Claims

1. A ball shaft comprising a ball shaft head part (111) having a top surface and a bottom surface, an axis extending through the top and the bottom surfaces, a passage (112) extending through the head part the passage opening, at a first end, at a first side of the head part and at a second end at an opposite second side of the head part, wherein the head part has flattened outer surfaces (111a, 111b) at each of the first and second sides and at sides between the first and second sides, the flattened outer surfaces separated by rounded corners (113).

2. The ball shaft as claimed in claim 1, further comprising a cam surface (130) provided on each of the top surface of the head part and the bottom surface of the head part, each cam surface extending radially, with respect to the axis, outwards relative to the sides of the head part.

3. The ball shaft of claim 2, wherein each cam surface is formed as a substantially flat plate having four corners (132) substantially aligned with the rounded corners and sides (133) between each pair of adjacent ones of the corners, the sides forming a convex side.

4. A ball shaft assembly comprising a ball shaft as claimed in any preceding claim, the ball shaft located in a valve housing having a vale inlet and a valve outlet, the shaft arranged for rotation relative to the housing, between an open position in which the passage is aligned with the inlet and the outlet, and a closed position wherein the passage is not aligned with the inlet and the outlet.

5. A ball shaft assembly as claimed in claim 4, further comprising a plurality of seals (150) arranged to seal against each of the flattened outer surfaces of the ball shaft head part when the ball shaft is in the open and the closed position.

6. A ball shaft assembly as claimed in claim 5, wherein each seal comprises a ring having a first, inner surface(151) and a second outer surface (152), the inner surface extending further towards the ball shaft head part than the second, outer surface.

7. The ball shaft assembly of claim 6, wherein the seals are made of Teflon.

8. The ball shaft assembly of any of claims 5 to 7, further comprising seal springs associated with each seal and arranged to bias the springs towards the ball shaft head part.

9. The ball shaft assembly of any of claims 5 to 8, wherein the cam is configured to push the seals against the force of the seal springs away from the ball shaft head part when the ball shaft is rotating between the open and closed positions.

10. The ball shaft assembly of any of claims 4 to 9, further comprising means for driving rotation of the ball shaft.

11. The ball shaft assembly of claim 10, wherein the means for driving rotation of the ball shaft is an electric motor.

12. The ball shaft assembly of claim 10 or 11, further comprising a drive shaft between the means for driving rotation of the ball shaft and the ball shaft.

13. The ball shaft assembly of claim 12, further comprising microswitches arranged on the drive shaft for determining the rotational position of the drive shaft.
